# EUROPEAN PATENT APPLICATION

(11) **EP 4 704 233 A2**
(43) Date of publication of application: **04.03.2026**
(21) Application number: 25197781.5
(22) Date of filing: 25.08.2025
(51) Int. Cl.: H01M 50/233, H01M 50/244, H01M 50/249, H01M 50/271, H01M 50/209

(54) **SEALED MODULAR BATTERY ENCLOSURE FOR A MATERIAL HANDLING VEHICLE**

(30) Priority: 28.08.2024 US 202463688191 P
(71) Applicant: The Raymond Corporation, Greene, NY 13778 (US)
(72) Inventor: BARTER, Stuart, Livonia, NY 14487 (US); SABA, Adeeb, Ontario, NY 14519 (US); HOWE, David B., Binghamton, NY 13901 (US); LISBURG, Brandon B., Bettendorf, IA 52722 (US); CHEATHAM, Nicholas C., Davenport, IA 52801 (US)
(74) Representative: Zacco Sweden AB

(57) **Abstract**

An industrial battery design including a sealed enclosure that can be used in material handling vehicle applications. The enclosure for the industrial battery (200, 300, 400, 500, 600, 700) includes a first piece of bent sheet metal (111) and a second piece of bent sheet metal (112) that is bolted to the first piece of bent sheet metal (111). The enclosure further includes a metal base plate (160) and a lid assembly (120) that includes a gasket (124).

## Description

### CROSS-REFERENCE TO RELATED APPLICATIONS

This application claims the benefit of and priority to U.S. Provisional Patent Application No. 63/688,191 filed August 28, 2024, the entirety of which is incorporated by reference herein.

### BACKGROUND

Various types of batteries have been used to provide power to material handling vehicles (MHVs) and to provide power in other industrial applications. However, some previous industrial battery designs are not flexible for different applications, and improved industrial battery designs are generally desired.

### BRIEF SUMMARY

The present disclosure relates generally to an industrial battery design that includes a sealed enclosure and a highly repeatable design for various types and configurations of battery cells.

In one aspect, the disclosure provides a material handling vehicle. The material handling vehicle includes a battery compartment and a battery that is disposed in the battery compartment and contained within an enclosure. The enclosure includes a first piece of bent sheet metal, a second piece of bent sheet metal bolted to the first piece of bent sheet metal, a metal base plate, and a lid assembly. The metal base plate is positioned below a bottom surface of the first piece of bent sheet metal and below a bottom surface of the second piece of bent sheet metal, and the first piece of bent sheet metal and the second piece of bent sheet metal are bolted to the metal base plate. The lid assembly includes a gasket and is positioned above a top surface of the first piece of bent sheet metal and above a top surface of the second piece of bent sheet metal such that the lid assembly seals the enclosure together with the first piece of bent sheet metal, the second piece of bent sheet metal, and the metal base plate. The first piece of bent sheet metal, the second piece of bent sheet metal, the metal base plate, and the lid assembly are not welded.

In another aspect, the disclosure provides a method for manufacturing an industrial battery for a material handling vehicle. The method includes forming a lower metal tray on a top surface of a metal base plate; disposing a battery cell on the lower metal tray; bolting the battery cell to the metal base plate; bolting a first piece of bent sheet metal to a second piece of bent sheet metal; bolting the first piece of bent sheet metal and the second piece of bent sheet metal to the metal base plate; and bolting a lid assembly comprising a gasket to the first piece of bent sheet metal and the second piece of bent sheet metal such that the first piece of bent sheet metal, the second piece of bent sheet metal, the metal base plate, and the lid assembly together form a sealed enclosure for the battery cell. The method does not include welding of the first piece of bent sheet metal, the second piece of bent sheet metal, the metal base plate, or the lid assembly.

In yet another aspect, the disclosure provides a battery for a material handling vehicle. The battery includes a first piece of bent sheet metal, a second piece of bent sheet metal bolted to the first piece of bent sheet metal, a metal base plate, and a lid assembly. The metal base plate is positioned below a bottom surface of the first piece of bent sheet metal and below a bottom surface of the second piece of bent sheet metal, and the first piece of bent sheet metal and the second piece of bent sheet metal are bolted to the metal base plate. The lid assembly includes a gasket and is positioned above a top surface of the first piece of bent sheet metal and above a top surface of the second piece of bent sheet metal such that the lid assembly seals the enclosure together with the first piece of bent sheet metal, the second piece of bent sheet metal, and the metal base plate. The first piece of bent sheet metal, the second piece of bent sheet metal, the metal base plate, and the lid assembly are not welded.

The foregoing and other aspects and advantages of the present disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the present disclosure.

### BRIEF DESCRIPTION OF THE DRAWINGS

The present disclosure will be better understood and features, aspects, and advantages other than those set forth above will become apparent when consideration is given to the following detailed description thereof. Such detailed description references the following drawings.
FIG. 1 is a perspective illustration of an example material handling vehicle including a battery compartment for an industrial battery, in accordance with some aspects of the disclosure.
FIG. 2 is a perspective illustration of an example box assembly that can be used to construct an industrial battery, in accordance with some aspects of the disclosure.
FIG. 3 is an exploded view showing example components of the box assembly of FIG. 2, in accordance with some aspects of the disclosure.
FIG. 4 is a perspective illustration of an example lid assembly that can be used to construct an industrial battery, in accordance with some aspects of the disclosure.
FIG. 5 is an exploded view showing example components of the lid assembly of FIG. 4, in accordance with some aspects of the disclosure.
FIG. 6 is a perspective illustration showing an example metal base plate, an example lower metal tray, and example cross beams of an industrial battery, in accordance with some aspects of the disclosure.
FIG. 7 is a perspective illustration showing example battery cells and associated interconnect structures of an industrial battery, in accordance with some aspects of the disclosure.
FIG. 8 is a perspective illustration showing example series busbars of an industrial battery, in accordance with some aspects of the disclosure.
FIG. 9 is a perspective illustration showing an example stiffening plate of an industrial battery, in accordance with some aspects of the disclosure.
FIG. 10 is perspective illustration showing example anti-tip plates of an industrial battery, in accordance with some aspects of the disclosure.
FIG. 11 is a perspective illustration showing an example modular configuration of an industrial battery, in accordance with some aspects of the disclosure.
FIG. 12 is a perspective illustration showing another example modular configuration of an industrial battery, in accordance with some aspects of the disclosure.
FIG. 13 is a perspective illustration showing yet another example modular configuration of an industrial battery, in accordance with some aspects of the disclosure.
FIG. 14 is a perspective illustration showing a further example modular configuration of an industrial battery, in accordance with some aspects of the disclosure.
FIG. 15 is a perspective illustration showing an additional example modular configuration of an industrial battery, in accordance with some aspects of the disclosure.
FIG. 16 is a perspective illustration showing another additional example modular configuration of an industrial battery, in accordance with some aspects of the disclosure.
FIG. 17A is a flowchart illustrating an example process for manufacturing an industrial battery, in accordance with some aspects of the disclosure.
FIGS. 17B-17I are a series of perspective illustrations showing the different steps in the example process of FIG. 17A, in accordance with some aspects of the disclosure.

### DETAILED DESCRIPTION

Before any aspects of the invention are explained in detail, it is to be understood that the invention is not limited in its application to the details of construction and the arrangement of components set forth in the following description or illustrated in the following drawings. The invention is capable of other aspects and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use aspects of the present disclosure. Various modifications to the illustrated aspects will be readily apparent to those skilled in the art, and the generic principles herein can be applied to other aspects and applications without departing from aspects of the present disclosure. Thus, aspects of the present disclosure are not intended to be limited to aspects shown but are to be accorded the widest scope consistent with the principles and features disclosed herein. The following detailed description is to be read with reference to the figures, in which like elements in different figures have like reference numerals. The figures, which are not necessarily to scale, depict selected aspects and are not intended to limit the scope of aspects of the present disclosure. Skilled artisans will recognize the examples provided herein have many useful alternatives and fall within the scope of aspects of the present disclosure.

It is also to be appreciated that material handling vehicles (MHVs) are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the various systems and methods disclosed herein are suitable for other vehicles, such as automobiles, busses, trains, tractor-trailers, farm vehicles, factory vehicles, and the like.

The present disclosure provides a casing and an internal structure for a sealed industrial battery that is highly repeatable for a variety of different modular battery configurations. By implementing the battery casing described herein, an organization can efficiently provide a variety of different energy solutions for customers. Some previous designs have included steel welded cases for ingress protection (IP) rated batteries. These previous designs typically include a welded box that holds the battery cells (or modules that contain battery cells), and the boxes are then bolted together to provide different modular battery configurations. Then, the bolted together boxes are typically mounted on a larger steel box that adds weight and/or meets the geometry requirements for a given material handling vehicle. However, this welding of steel cases and other types of enclosures can be both labor intensive and expensive. Additionally, the multiple bolted box design does not work for battery architectures such as lithium iron phosphate (LFP) battery architectures because these architectures require that the structure holding the battery modules is a structural component of the battery pack itself. Moreover, many previous designs do not provide a high degree of manufacturing flexibility and cannot be adapted for different modular configurations.

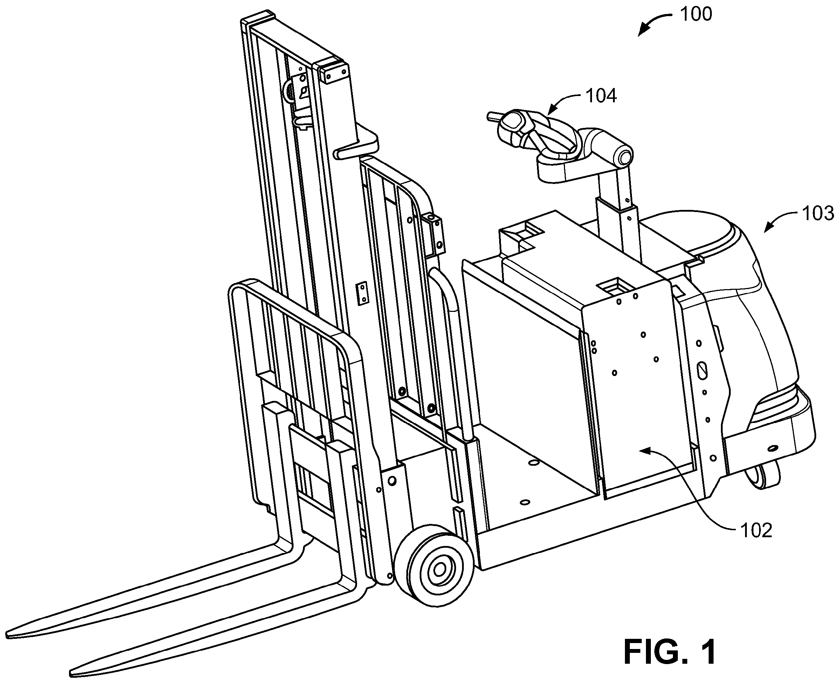

Referring to FIG. 1, a perspective illustration showing an example material handling vehicle 100 is shown, in accordance with some aspects of the disclosure. In the example of FIG. 1, the material handling vehicle 100 is a forklift truck. The material handling vehicle 100 is shown to include a battery compartment 102, a power section 103, and a handle 104. The power section 103 can include any suitable power electronics and other components for operating the material handling vehicle 100. The handle 104 can be used by an operator of the material handling vehicle 100 to steer the material handling vehicle 100. The battery compartment 102 can be used to install and house an industrial battery that powers the material handling vehicle 100, such as the various modular industrial battery configurations described below. The battery compartment 102 in the material handling vehicle 100 can include terminals, ports, wiring, and other components for connecting an industrial battery to the material handling vehicle 100. It will be appreciated that, depending on the type and configuration of material handling vehicle, battery compartments similar to the battery compartment 102 can be provided in a variety of locations and configurations.

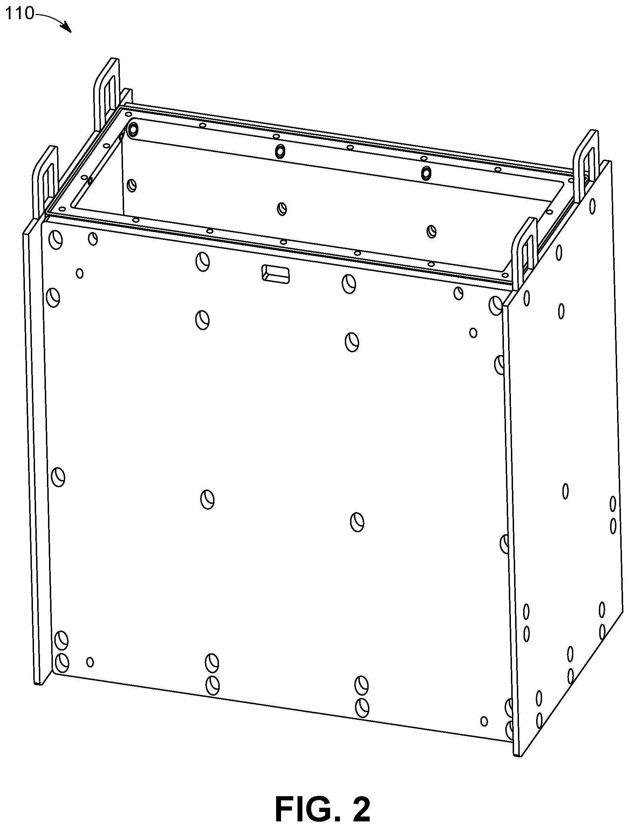

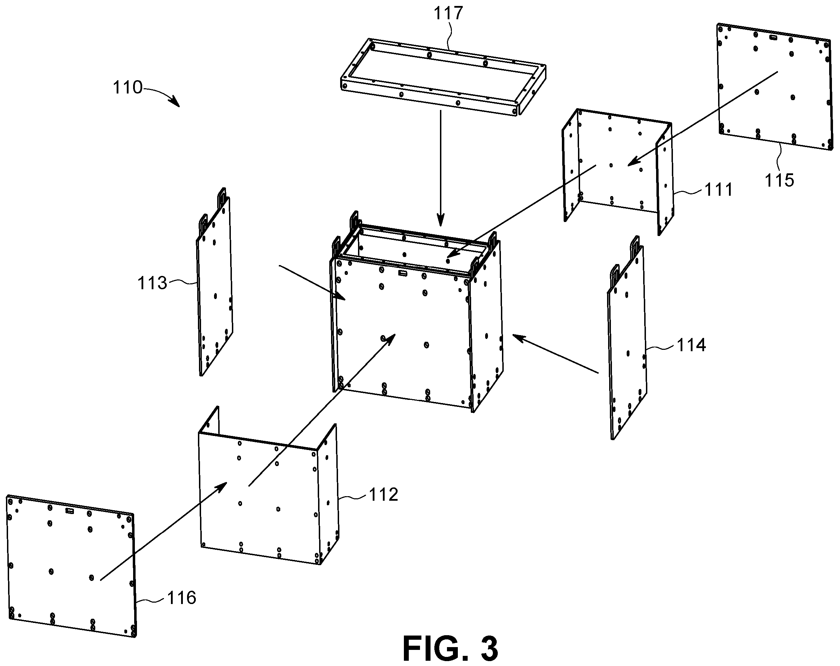

Referring to FIG. 2, a perspective illustration showing an example box assembly 110 that can be used to construct an industrial battery that powers the material handling vehicle 100 is shown, in accordance with some aspects of the disclosure. Referring to FIG. 3, an exploded view showing the components of the box assembly 110 is shown, in accordance with some aspects of the disclosure. As shown, the box assembly 110 can include a first piece of bent sheet metal 111, a second piece of bent sheet metal 112, a first metal counterweight 113, a second metal counterweight 114, a third metal counterweight 115, a fourth metal counterweight 116, and a metal frame 117. The box assembly 110 together with a lid assembly (e.g., the lid assembly 120 detailed below) and a metal base plate (e.g., the metal base plate 160 detailed below) can form a sealed enclosure that is efficient and highly repeatable for a variety of different modular configurations. Depending on the application, one or more of the first metal counterweight 113, the second metal counterweight 114, the third metal counterweight 115, or the fourth metal counterweight 116 can be excluded from the box assembly 110. Further, one or more additional counterweights not shown (e.g., end counterweights) can be included as part of the box assembly 110 depending on the application.

The first piece of bent sheet metal 111 and the second piece of bent sheet metal 112 can both be implemented as pieces of bent sheet steel, among other possible implementations. The first piece of bent sheet metal 111 and the second piece of bent sheet metal 112 can be constructed using only flat plate stock, thereby allowing construction of a highly IP rated (e.g., IP65 or higher) industrial battery without requiring any welding. The first piece of bent sheet metal 111 and the second piece of bent sheet metal 112 can be bolted together instead of being welded together. As shown in FIG. 2 and FIG. 3, the metal frame 117 can be positioned above a top surface of the first piece of bent sheet metal 111 and above a top surface of the second piece of bent sheet metal 112. For example, the metal frame 117 can be positioned sub-flush relative to the top surface of the first piece of bent sheet metal 111 and the top surface of the second piece of bent sheet metal 112 to allow for a seal to be positioned on the top surface of the first piece of bent sheet metal 111 and the top surface of the second piece of bent sheet metal 112. The metal frame 117 can provide an interface for connecting the lid assembly 120 (detailed below) to the top surface of the first piece of bent sheet metal 111 and to the top surface of the second piece of bent sheet metal 112 (e.g., by bolting) such that the lid assembly 120 is positioned on the top surface of the first piece of bent sheet metal 111 on the top surface of the second piece of bent sheet metal 112.

The first metal counterweight 113, the second metal counterweight 114, the third metal counterweight 115, and/or the fourth metal counterweight 116 can be bolted to the first piece of bent sheet metal 111 and the second piece of bent sheet metal 112 to add weight and/or meet the geometry requirements of the battery compartment 102. Different quantities and configurations of metal counterweights similar to each of the first metal counterweight 113, the second metal counterweight 114, the third metal counterweight 115, and/or the fourth metal counterweight 116 can be bolted to the first piece of bent sheet metal 111 and the second piece of bent sheet metal 112 depending on the intended application. Moreover, the box assembly 110 can include more than two pieces of bent sheet metal that can be bolted together. Additionally, different types of metal that do not require welding can be used in addition to sheet metal. However, using only the first piece of bent sheet metal 111 and the second piece of bent sheet metal 112 in particular can provide added manufacturing advantages relative to these alternative approaches.

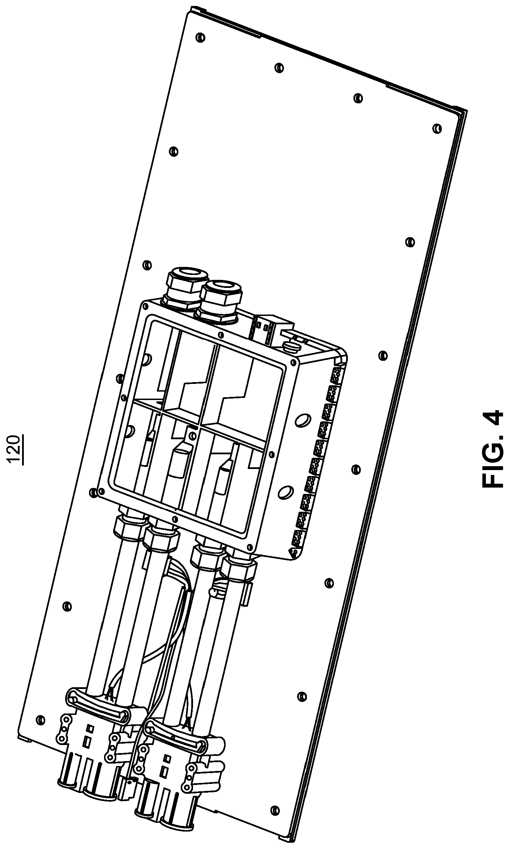

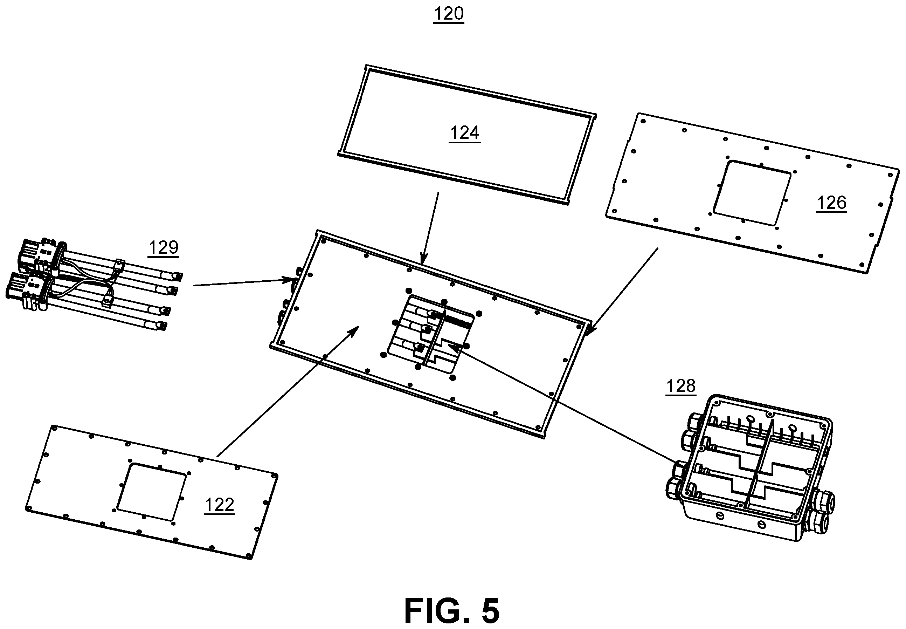

Referring to FIG. 4, a perspective illustration showing an example lid assembly 120 that can be used to construct an industrial battery that powers the material handling vehicle 100 is shown, in accordance with some aspects of the disclosure. Referring to FIG. 5, an exploded view showing components of the lid assembly 120 is shown, in accordance with some aspects of the disclosure. As shown, the lid assembly 120 can include a compression limiter 122, a gasket 124, a metal lid 126, a turret housing 128, and cable assemblies 129. The lid assembly 120 can be connected to the metal frame 117 during manufacturing of the industrial battery such that, in the final industrial battery structure, the lid assembly 120 is positioned above the top surface of the first piece of bent sheet metal 111 and above the top surface of the second piece of bent sheet metal 112. The gasket 124 can generally be designed to seal a gap between the box assembly 110 and the lid assembly 120 such that, when the lid assembly 120 is attached to the box assembly 110, the gasket 124 forms a sealed enclosure for one or more battery modules and/or cells of the industrial battery. The gasket 124 can be constructed using a variety of suitable materials and can take a variety of different shapes. For example, the gasket 124 can be constructed using various types of rubber materials and combinations thereof.

The compression limiter 122 can generally protect the lid assembly 120 during events when compressive loads are applied to the lid assembly 120 and to the industrial battery more generally. The compression limiter 122 can also protect the gasket 124 even in scenarios where no compressive load is applied. For example, the compression limiter 122 can prevent crushing of the gasket 124 during assembly of the industrial battery, where significant torque may be applied to various bolts (e.g., bolts for securing the lid assembly 120 to the industrial battery) as part of the assembly process. Without the compression limiter 122, it may not be possible to install the lid assembly 120 to the industrial battery while also having sufficiently secured (torqued) bolts and a functioning seal. The compression limiter 122 can be constructed using a variety of suitable materials and can take a variety of different shapes depending on the intended application. For example, the compression limiter 122 can be constructed using various types of metals (e.g., steel, aluminum, etc.). The metal lid 126 can generally serve as a protective lid structure for the industrial battery and can also be implemented in a variety of ways. For example, similar to the first piece of bent sheet metal 111 and the second piece of bent sheet metal 112, the metal lid 126 be implemented using flat plate steel. The turret housing 128 can be used to hold and protect the cable assemblies 129, and the cable assemblies 129 can include any suitable cables for connecting the industrial battery to the material handling vehicle 100 and/or charger cables for the industrial battery. The turret housing 128 can be constructed using a variety of suitable materials.

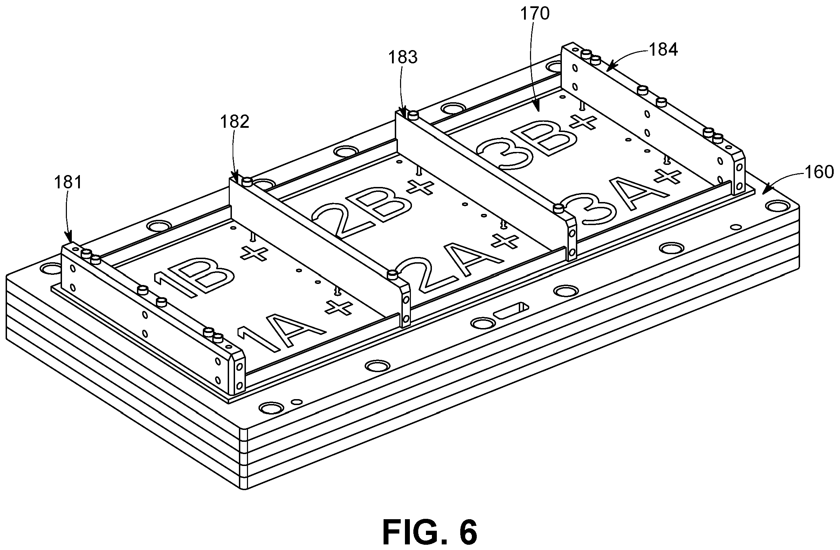

Referring to FIG. 6, a perspective illustration showing an example metal base plate 160, an example lower metal tray 170, and example cross beams 181, 182, 183, and 184 that can be used to construct an industrial battery that powers the material handling vehicle 100 is shown, in accordance with some aspects of the disclosure. The metal base plate 160 can be formed using a variety of suitable metals (e.g., steel, aluminum, etc.) and can have different dimensions depending on the application. The metal base plate 160 generally provides structure to serve as the base on the industrial battery. The lower metal tray 170 can likewise be formed using a variety of suitable metals (e.g., steel, aluminum, etc.) and can have different dimensions. The lower metal tray 170 can further include screen-printed text markings as shown in FIG. 6 to help facilitate efficiencies in the battery assembly process as shown in FIG. 6. In some examples, a compression limiter and a gasket similar to the compression limiter 122 and the gasket 124 of the lid assembly can be formed between the metal base plate 160 and the lower metal tray 170 such that, when the box assembly 110 is bolted to the metal base plate 160, a sealed enclosure for one or more battery modules and/or cells of the industrial battery is formed.

The cross beam 181, the cross beam 182, the cross beam 183, and the cross beam 184 can be coupled to the lower metal tray 170 (e.g., via bolting) to help handle the loading resulting from vibration and other forces, which could otherwise compromise the battery pack. The cross beam 181, the cross beam 182, the cross beam 183, and the cross beam 184 can be formed using a variety of suitable materials, such as bar steel, for example. The structural support provided by the cross beam 181, the cross beam 182, the cross beam 183, and the cross beam 184 help enable the construction of a weld-free battery casing for an industrial battery. While four cross beams are shown in FIG. 6, different quantities, sizes, and configurations of cross beams can also be used depending on the application.

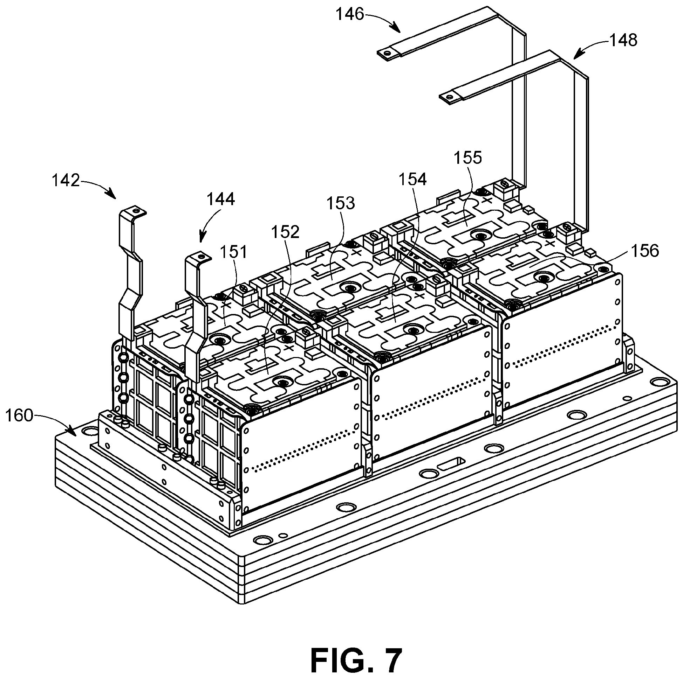

Referring to FIG. 7, a perspective illustration of example battery cells and associated interconnect structures of an industrial battery that powers the material handling vehicle 100 is shown, in accordance with some aspects of the disclosure. The example shown in FIG. 7 is a particular modular battery configuration that includes two rows of three battery cells each. As shown, the first row includes a battery cell 151, a battery cell 153, and a battery cell 155, and the second row includes a battery cell 152, a battery cell 154, and a battery cell 156. The battery cell 151, the battery cell 152, the battery cell 153, the battery cell 154, the battery cell 155, and the battery cell 156 can be formed on the metal base plate 160 and the lower metal tray 170 and can be supported by the cross beam 181, the cross beam 182, the cross beam 183, and the cross beam 184. The battery cell 151, the battery cell 152, the battery cell 153, the battery cell 154, the battery cell 155, and the battery cell 156 can be LFP battery cells, for example.

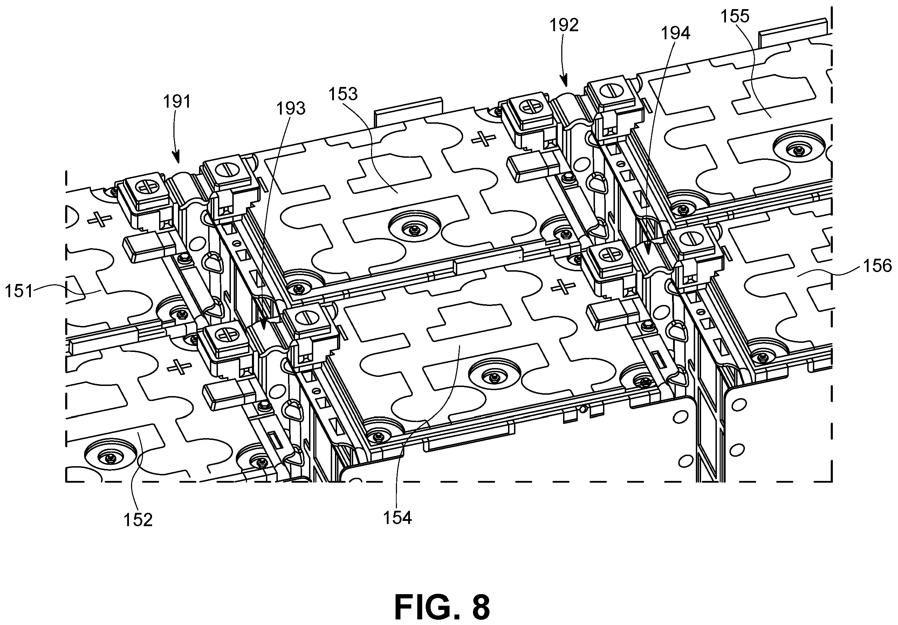

The structure shown in FIG. 7 also includes four corner busbars: a busbar 142, a busbar 144, a busbar 146, and a busbar 148. The busbar 142, the busbar 144, the busbar 146, and the busbar 148 can be formed using various suitable conductive metals and/or combinations thereof (e.g., copper, etc.) and can be used to connect individual battery cells together within the battery pack. Referring to FIG. 8, a perspective illustration showing example series busbars of an industrial battery that powers the material handling vehicle 100 is shown, in accordance with some aspects of the disclosure. Specifically, a series busbar 191 is shown to connect the battery cell 151 and the battery cell 153, a series busbar 192 is shown to connect the battery cell 153 and the battery cell 155, a series busbar 193 is shown to connect the battery cell 152 and the battery cell 154, and a series busbar 194 is shown to connect the battery cell 154 and the battery cell 156. The series busbar 191, the series busbar 192, the series busbar 193, and the series busbar 194 can be made of flexible conductive material (e.g., copper, etc.) to allow small movements between battery cells connected in series to help handle the loading resulting from vibration and other forces, which could otherwise compromise the battery pack.

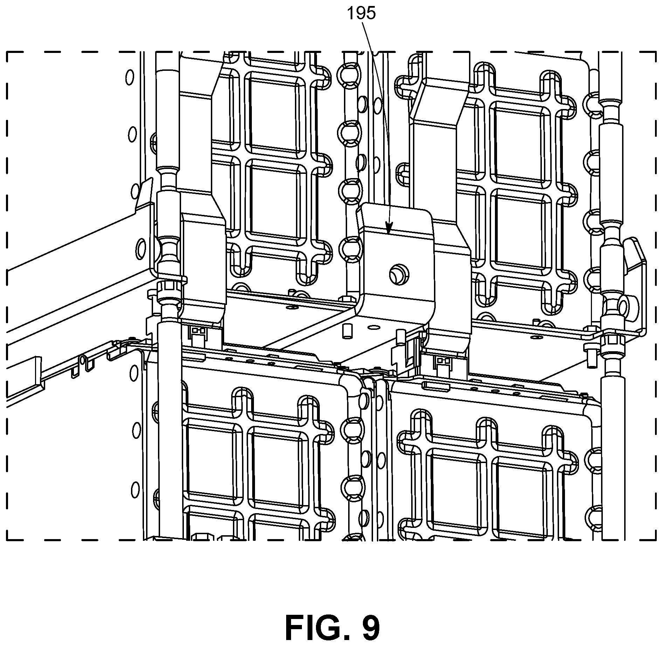

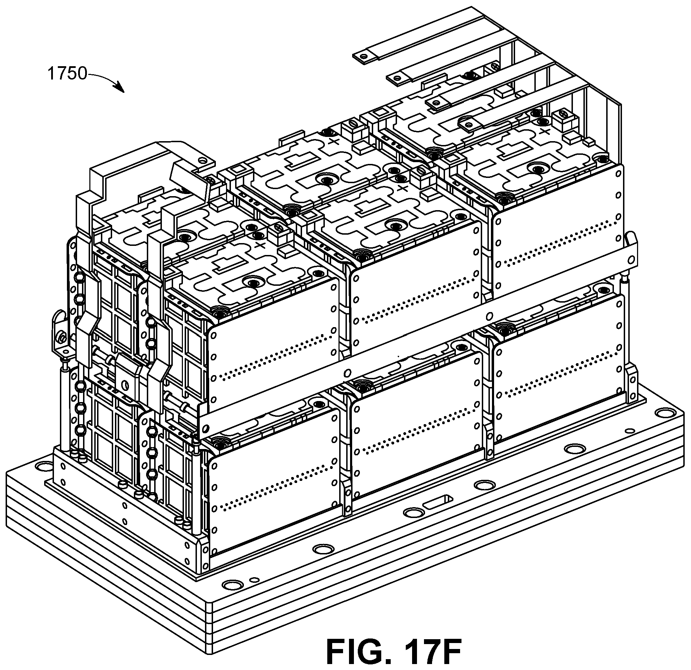

Referring to FIG. 9, a perspective illustration showing example stiffening plate 195 of an industrial battery that powers the material handling vehicle 100 is shown, in accordance with some aspects of the disclosure. As shown, the stiffening plate 195 can be strategically placed within the battery pack to help strengthen the trays that individual battery cells are mounted to within the battery pack and allow for more rigid trays to be used to construct the battery pack. In FIG. 9, a middle metal tray is formed over the first level of battery cells (i.e., the battery cell 151, the battery cell 152, the battery cell 153, the battery cell 154, the battery cell 155, and the battery cell 156), and a second level of battery cells (i.e., two more rows of three battery cells each) is formed on the middle metal tray (see, e.g., FIG. 17F).

The stiffening plate 195 can be constructed using sheet metal (e.g., bent sheet steel, etc.) and strategically placed as shown in FIG. 9 such that the stiffening plate 195 is coupled to a bottom surface of the middle metal tray and to a lateral side of one or more battery cells in the second level of battery cells formed on the middle metal tray. That is, as shown, the stiffening plate 195 can include a horizontal section that is coupled to the bottom surface of the middle metal tray (e.g., via bolting) and a vertical section that provides structural support for one or more battery cells in the second level of battery cells. The vertical section of the stiffening plate 195 may or may not be directly in contact with the one or more battery cells in the second level of battery cells, and the stiffening plate 195 may or may not be directly coupled to the one or more battery cells in the second level of battery cells (e.g., via bolting, etc.). The vertical section of the stiffening plate 195 as shown in FIG. 9 generally extends upwards (vertically) towards the second level of battery cells to provide structural support for the second level of battery cells.

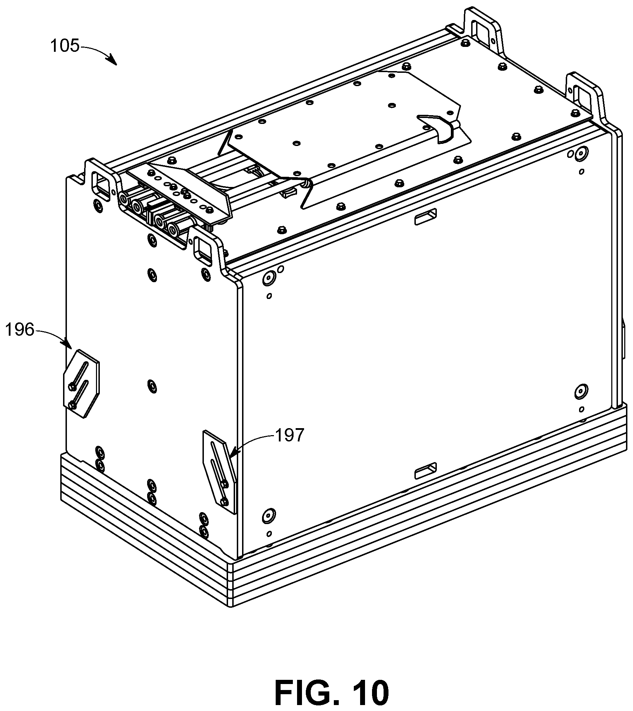

Referring to FIG. 10, a perspective illustration showing example anti-tip plates 196 and 197 of a battery 105 that powers the material handling vehicle 100 is shown, in accordance with some aspects of the disclosure. FIG. 10 shows an example of a completed industrial battery assembly (i.e., battery) 105 on which the anti-tip plate 196 and the anti-tip plate 197 can be seen. The anti-tip plate 196 and the anti-tip plate 197 can be used to secure the battery 105 within the battery compartment 102 of the material handling vehicle 100. The anti-tip plate 196 and the anti-tip plate 197 can be opposing slotted plates, where the orientation of the slots in the anti-tip plate 196 and the anti-tip plate 197 takes out any gap that may be present from the battery to the material handling vehicle 100 using gravity and the tightening of two bolts each to lock the battery 105 in place within the battery compartment 102. The anti-tip plate 196 and the anti-tip plate 197 do not impede the insertion of the battery 105 into the battery compartment 102. Further, the slots in the anti-tip plate 196 and the anti-tip plate 197 are oriented so as to prevent back travel and prevent loosening of the bolts over time. Specifically, as shown in FIG. 10, the slots of the anti-tip plate 196 and the anti-tip plate 197 are oriented such, in the direction towards the metal base plate 160 (e.g., in the direction of gravitational force), they face downward (towards the metal base plate 160 instead of the lid assembly 120) and outward (i.e., towards the outer periphery of the metal base plate 160 instead of towards the center of the metal base plate 160). The slots are also straight in the example implementation shown in FIG. 10. The anti-tip plate 196 and the anti-tip plate 197 can be used instead of alternative approaches such as shimming and jack bolts.

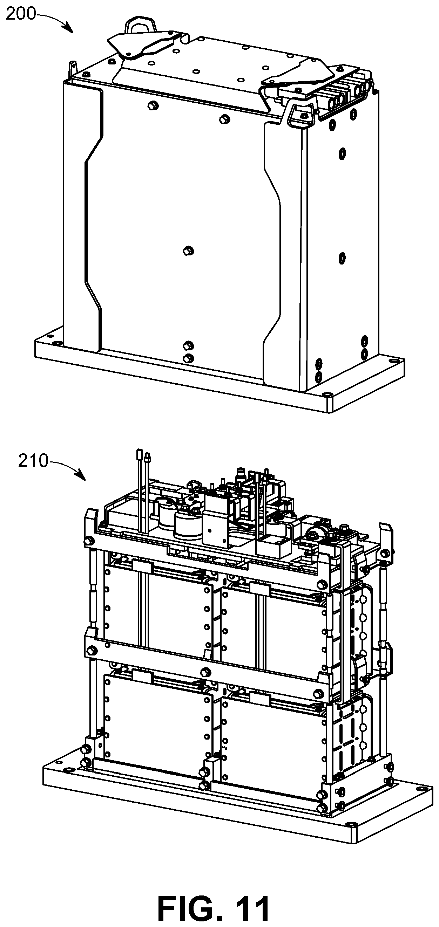

The modular configuration of the battery 105 and the associated components as shown in FIGS. 6-10 above provides just one example of a modular configuration that is possible using the components and techniques described herein. Additional example modular configurations are shown and described below with respect to FIGS. 11-16. The design of the enclosure as detailed above is highly repeatable for these different modular configurations, which can help provide improved manufacturing efficiencies. Additionally, the enclosure can be sealed to protect the internal structure and components of the battery, and the enclosure can be formed without requiring welding of components including the box assembly 110, the lid assembly 120, and the metal base plate 160.

Referring to FIG. 11, a perspective view showing an example implementation of an industrial battery 200 is shown, in accordance with some aspects of the disclosure. The industrial battery 200 includes components similar to the box assembly 110, the lid assembly 120, the metal base plate 160, the lower metal tray 170, etc. as detailed above. FIG. 11 shows both a completed assembly of the industrial battery 200 as well as an internal structure 210 of the industrial battery 200. The internal structure 210 includes the internal components of the industrial battery 200 excluding the enclosure that is used to seal and protect the internal structure 210. The internal structure 210 of the industrial battery 200 represents a possible modular configuration that includes four individual battery cells or modules that are disposed in two stacked rows, as shown in FIG. 11. A middle metal tray is disposed between the two stacked rows, and an upper metal tray is disposed on top of the top row. An electronics tray that can include components such as contactors, fuses, a controller, and a communications interface (e.g., for interfacing with the material handling vehicle 100) is disposed on the upper metal tray. The lid assembly of the industrial battery 200 also includes two charge ports that can be used to connect one or more chargers to the industrial battery 200.

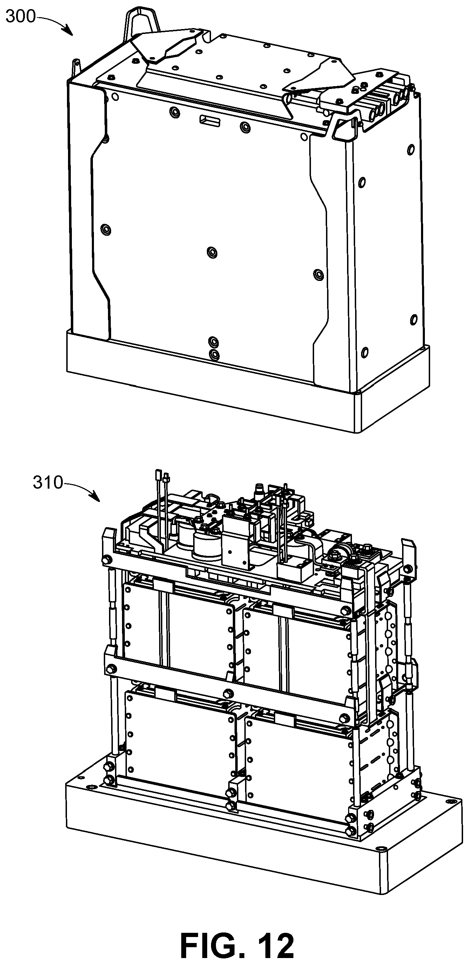

Referring to FIG. 12, a perspective view showing an example implementation of another industrial battery 300 is shown, in accordance with some aspects of the disclosure. The industrial battery 300 includes components similar to the box assembly 110, the lid assembly 120, the metal base plate 160, the lower metal tray 170, etc. as detailed above. FIG. 12 shows both a completed assembly of the industrial battery 300 as well as an internal structure 310 of the industrial battery 300. The internal structure 310 includes the internal components of the industrial battery 300 excluding the enclosure that is used to seal and protect the internal structure 310. The internal structure 310 of the industrial battery 300 represents another possible modular configuration that again includes four individual battery cells or modules that are disposed in two stacked rows, as shown in FIG. 12. However, relative to the industrial battery 200, the industrial battery includes additional counterweight (e.g., the third metal counterweight 115 and the fourth metal counterweight 116) to increase the overall weight of the battery for compatibility with different types of vehicles. A middle metal tray is disposed between the two stacked rows, and an upper metal tray is disposed on top of the top row. An electronics tray that can include components such as contactors, fuses, a controller, and a communications interface is disposed on the upper metal tray. The lid assembly of the industrial battery 300 also includes two charge ports that can be used to connect one or more chargers to the industrial battery 300.

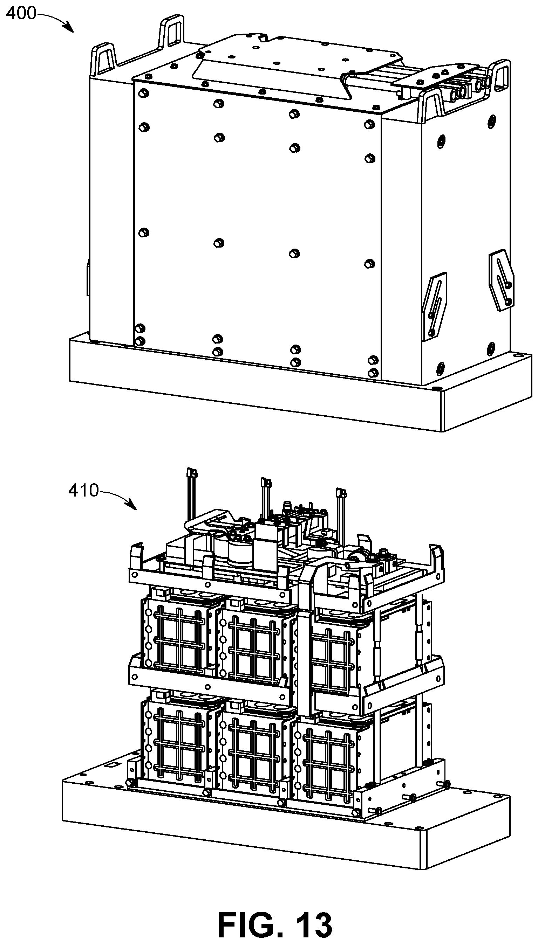

Referring to FIG. 13, a perspective view showing an example implementation of yet another industrial battery 400 is shown, in accordance with some aspects of the disclosure. The industrial battery 400 includes components similar to the box assembly 110, the lid assembly 120, the metal base plate 160, the lower metal tray 170, etc. as detailed above. FIG. 13 shows both a completed assembly of the industrial battery 400 and an internal structure 410 of the industrial battery 400. The internal structure 410 includes the internal components of the industrial battery 400 again excluding the enclosure that is used to seal and protect the internal structure 410. The internal structure 410 of the industrial battery 400 represents yet another possible modular configuration that includes six individual battery cells or modules that are disposed in two stacked rows, as shown in FIG. 13. A middle metal tray is disposed between the two stacked rows, and an upper metal tray is disposed on top of the top row. An electronics tray that can include components such as contactors, fuses, a controller, and a communications interface is disposed on the upper metal tray. The lid assembly of the industrial battery 400 also includes two charge ports that can be used to connect one or more chargers to the industrial battery 400.

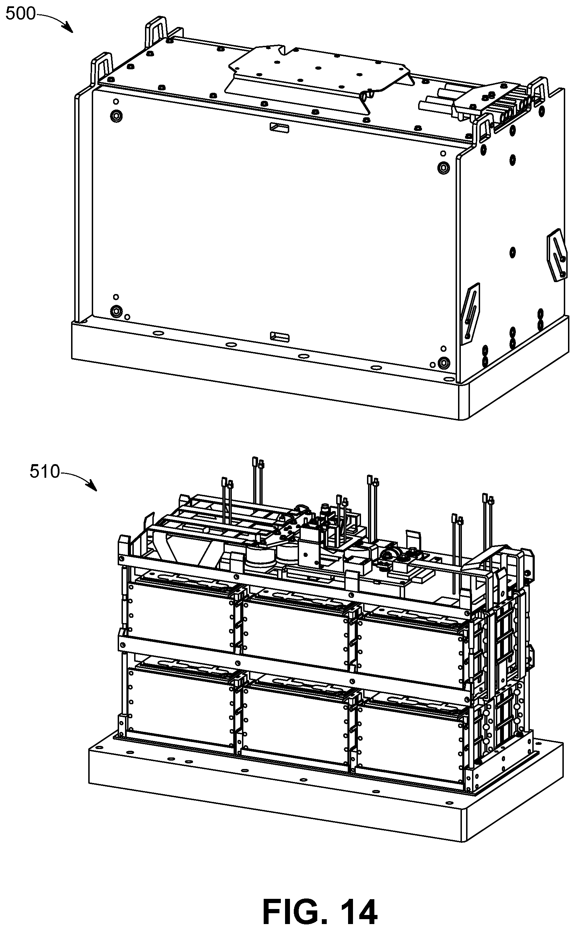

Referring to FIG. 14, a perspective view showing an example implementation of still another industrial battery 500 is shown, in accordance with some aspects of the disclosure. The industrial battery 500 includes components similar to the box assembly 110, the lid assembly 120, the metal base plate 160, the lower metal tray 170, etc. as detailed above. FIG. 14 again shows both a completed assembly of the industrial battery 500 as well as an internal structure 510 of the industrial battery 500. The internal structure 510 includes the internal components of the industrial battery 500 excluding the enclosure that is used to seal and protect the internal structure 510. The internal structure 510 of the industrial battery 500 represents still another possible modular configuration that includes six individual battery cells or modules of a different type relative to the industrial battery 400 that are disposed in two stacked rows, as shown in FIG. 14. A middle metal tray is disposed between the two stacked rows, and an upper metal tray is disposed on top of the top row. An electronics tray that can include components such as contactors, fuses, a controller, and a communications interface is disposed on the upper metal tray. The lid assembly of the industrial battery 500 also includes two charge ports that can be used to connect one or more chargers to the industrial battery 500.

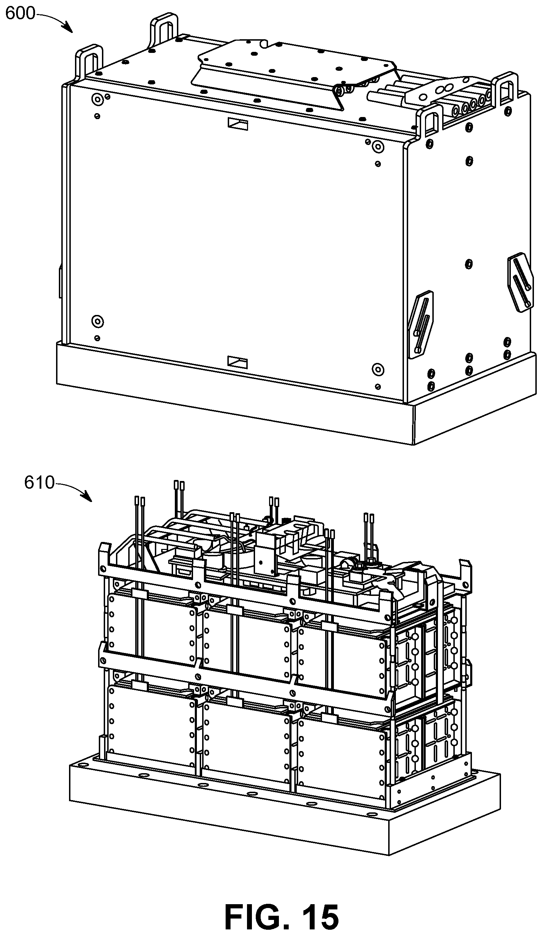

Referring to FIG. 15, a perspective view showing an example implementation of a further industrial battery 600 is shown, in accordance with some aspects of the disclosure. The industrial battery 600 includes components similar to the box assembly 110, the lid assembly 120, the metal base plate 160, the lower metal tray 170, etc. as detailed above. FIG. 15 shows both a completed assembly of the industrial battery 600 as well as an internal structure 610 of the industrial battery 600. The internal structure 610 includes the internal components of the industrial battery 600 excluding the enclosure that is used to seal and protect the internal structure 610. The internal structure 610 of the industrial battery 600 represents a further possible modular configuration that again includes six individual battery cells or modules of a different type relative to the industrial battery 400 and the industrial battery 500 that are disposed in two stacked rows, as shown in FIG. 15. An upper metal tray is disposed between the two stacked rows, and an upper metal tray is disposed on top of the top row. An electronics tray that can include components such as contactors, fuses, a controller, and a communications interface is disposed on the upper metal tray. The lid assembly of the industrial battery 600 also includes two charge ports that can be used to connect one or more chargers to the industrial battery 600.

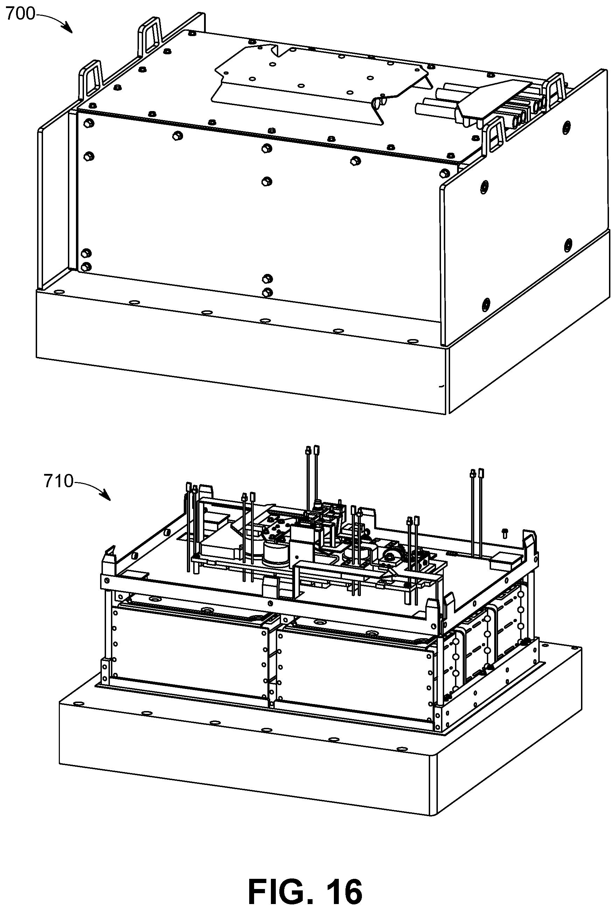

Referring to FIG. 16, a perspective view showing an example implementation of another industrial battery 700 is shown, in accordance with some aspects of the disclosure. The industrial battery 700 includes components similar to the box assembly 110, the lid assembly 120, the metal base plate 160, the lower metal tray 170, etc. as detailed above. FIG. 16 shows both a completed assembly of the industrial battery 700 as well as an internal structure 710 of the industrial battery 700. The internal structure 710 includes the internal components of the industrial battery 700 excluding the enclosure that is used to seal and protect the internal structure 710. The internal structure 710 of the industrial battery 700 represents another possible modular configuration that includes two large individual battery cells or modules that are disposed in a single row, as shown in FIG. 16. An upper metal tray is disposed on top of the single row. An electronics tray that can again include components such as contactors, fuses, a controller, and a communications interface is disposed on the upper metal tray. The lid assembly of the industrial battery 700 also includes two charge ports that can be used to connect one or more chargers to the industrial battery 700.

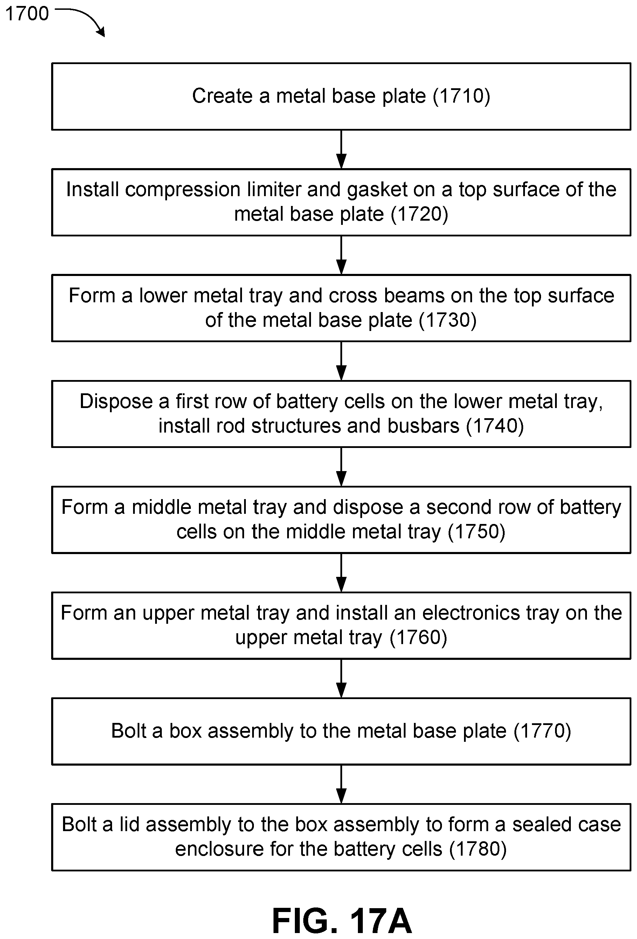

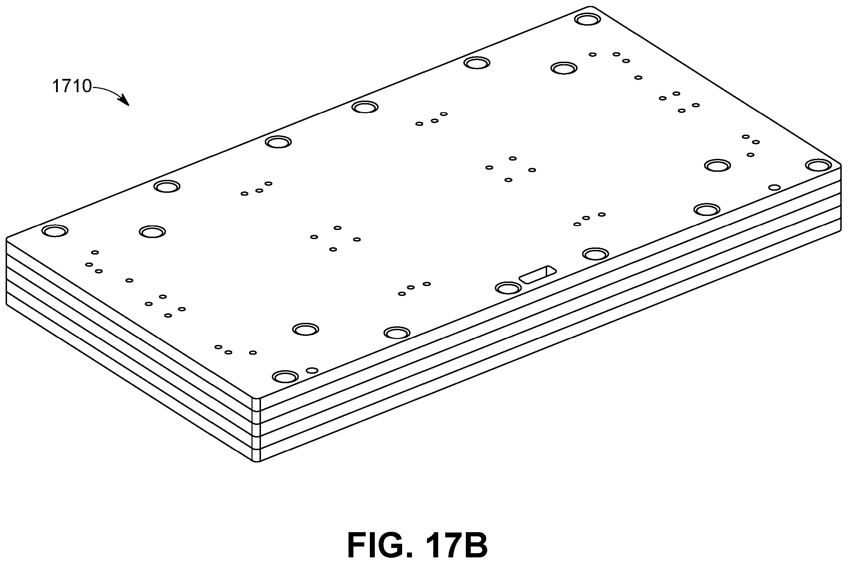

Referring to FIG. 17A, a flowchart illustrating an example process 1700 that can be used to manufacture an industrial battery is shown, in accordance with some aspects of the disclosure. The process 1700 can be performed using a variety of different types of machinery and/or manual labor. The different steps of the process 1700 are illustrated sequentially in FIGS. 17B-17I. The process 1700 can be used to provide an industrial battery with a casing and an internal structure that is efficient and highly repeatable for a variety of different modular battery configurations. The industrial battery manufactured using the process 1700 can include components similar to those detailed above, including the box assembly 110, the lid assembly 120, the metal base plate 160, the lower metal tray 170, etc. The illustrations provided in FIGS. 17B-17I show just one example implementation of the process 1700, where the process 1700 is used to manufacture an industrial battery with a modular configuration similar to the industrial battery 600 as detailed above.

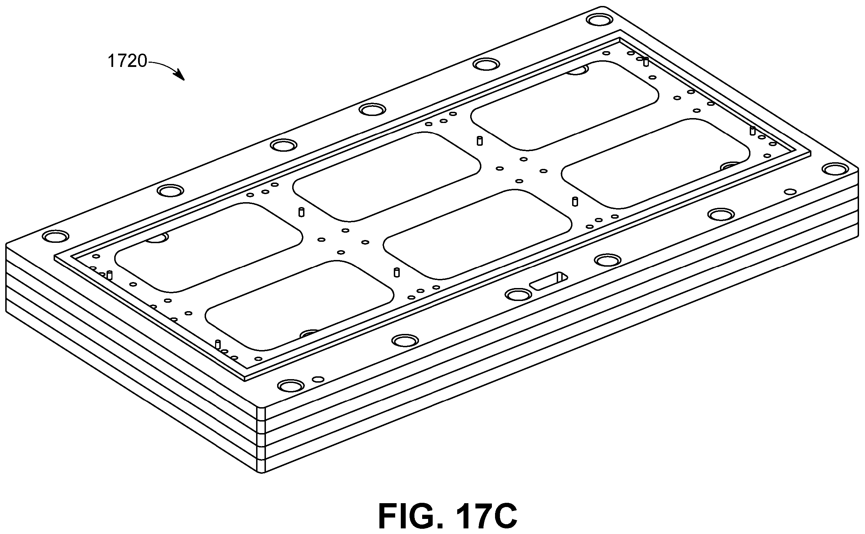

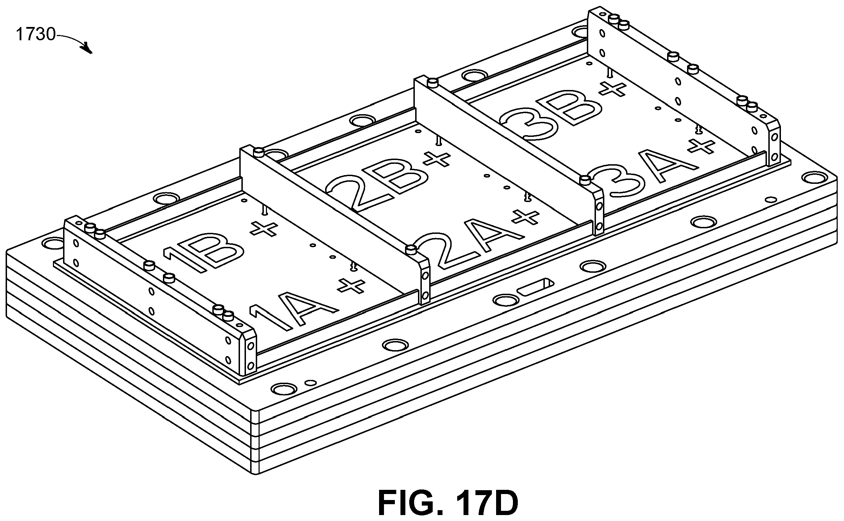

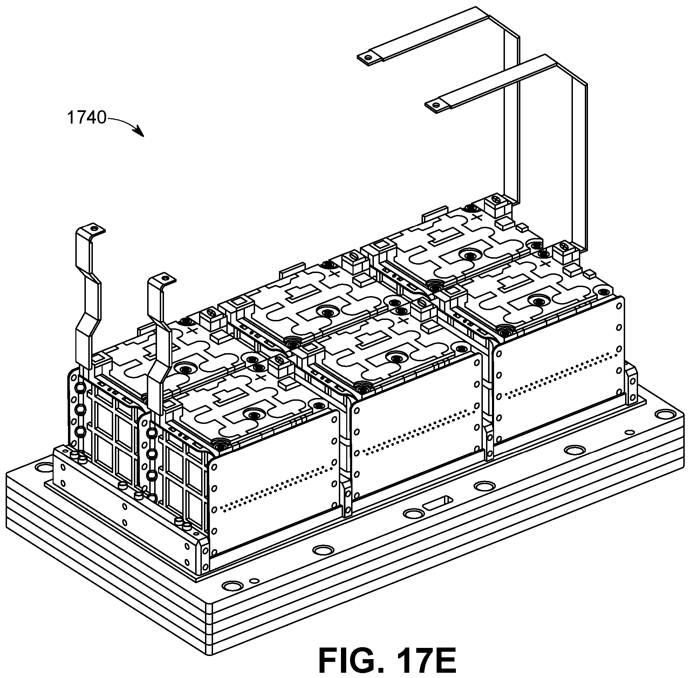

At step 1710, the process 1700 is shown to include creating a metal base plate (FIG. 17B). For example, the process 1700 can include creating the metal base plate 160 as described above. At step 1720, the process 1700 is shown to include installing a compression limiter and a gasket on a top surface of the metal base plate (FIG. 17C). For example, the process 1700 can include installing a compression limiter and a gasket similar to the compression limiter 122 and the gasket 124 detailed above on the top surface of the metal base plate 160. At step 1730, the process 1700 is shown to include forming a lower metal tray and cross beams on the top surface of the metal base plate (FIG. 17D). For example, the process 1700 can include forming the lower metal tray 170 and the cross beams 181, 182, 183, and 184 on the top surface of the metal base plate 160 in connection with the gasket and the compression limiter installed at step 1720. At step 1740, the process 1700 is shown to include disposing a first row of battery cells on the lower metal tray and installing associated busbars (FIG. 17E). For example, the process 1700 can include disposing the battery cells 151, 152, 153, 154, 155, and 156 on a top surface of the lower metal tray 170 in connection with the cross beams 181, 182, 183, and 184. The process 1700 can also include installing the busbars 142, 144, 146, 148, 191, 192, 193, and 194, for example.

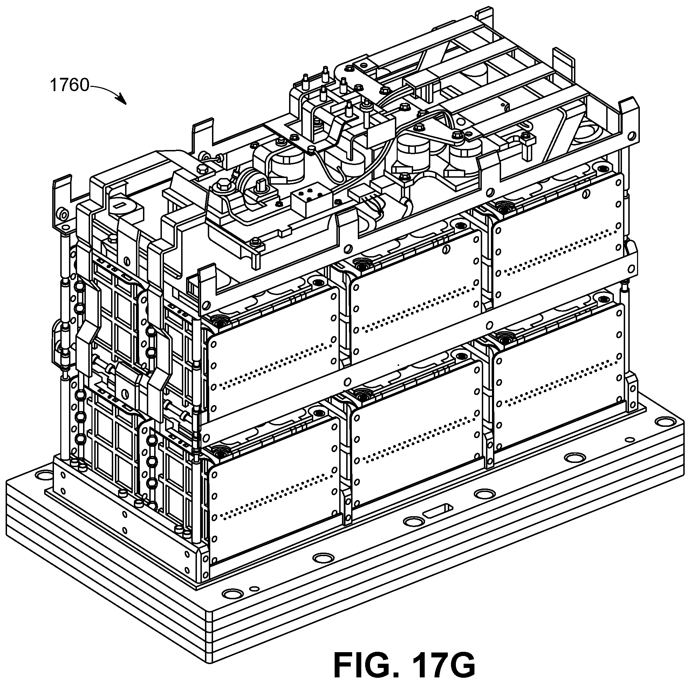

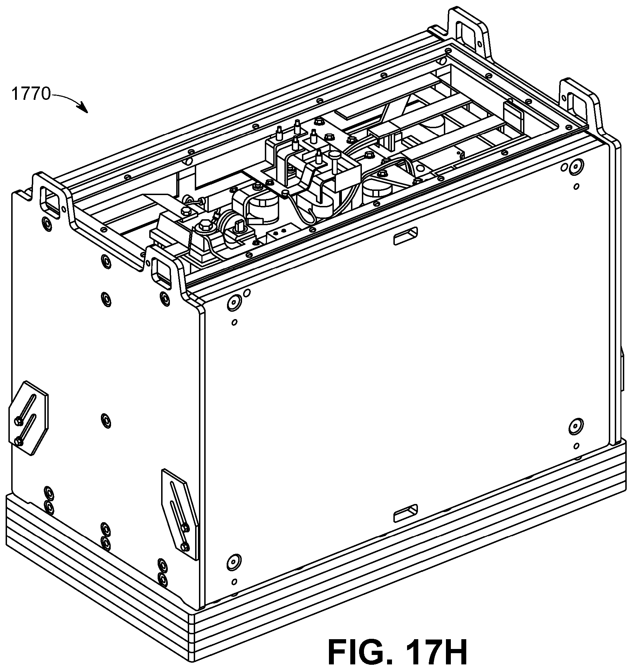

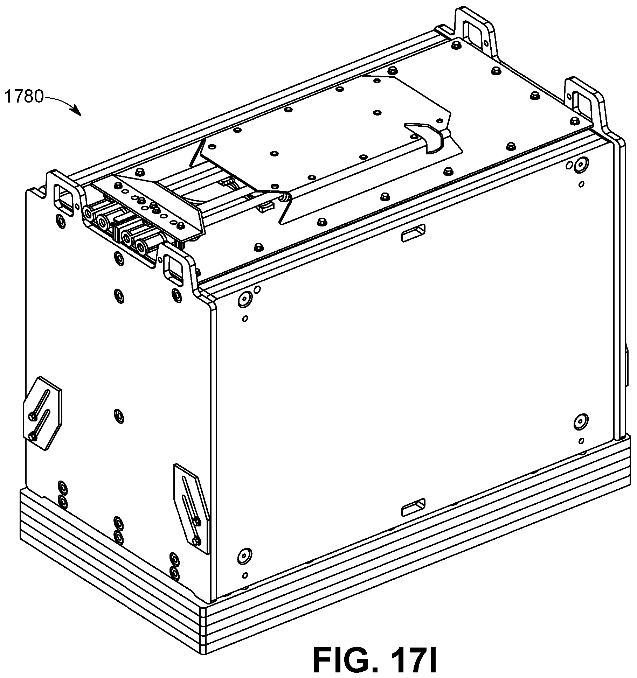

At step 1750, the process 1700 is shown to include forming a middle metal tray and disposing a second row of battery cells on the middle metal tray (FIG. 17F). For example, the process 1700 can include forming the middle metal tray over the battery cells 151, 152, 153, 154, 155, and 156 and disposing another row of six battery cells on the middle tray as shown in FIG. 17F. At step 1750, the process 1700 can also include forming the stiffening plate 195 on the middle metal tray to help strengthen the middle metal tray to support the second row of six battery cells. At step 1760, the process 1700 is shown to include forming an upper metal tray and installing an electronics tray on the upper metal tray (FIG. 17G). For example, the process 1700 can include forming the upper metal tray over the second row of six battery cells that is formed on the middle tray, and then installing the electronics tray on the top surface of the upper metal tray opposite the second row of six battery cells as shown in FIG. 17G. At step 1770, the process 1700 is shown to include bolting a box assembly to the metal base plate (FIG. 17H). For example, the process 1700 can include bolting the box assembly 110 to the metal base plate 160. The box assembly 110 can include the anti-tip plate 196 and the anti-tip plate 197 as detailed above. At step 1780, the process 1700 is shown to include bolting a lid assembly to the box assembly to form a sealed enclosure for the battery cells (FIG. 17I). For example, the process 1700 can include bolting the lid assembly 120 to the box assembly 110.

It should be noted that, while the steps of the process 1700 are shown in a particular order in FIG. 17, the process 1700 may not include all steps shown, may include additional steps, or may include the steps in a different order.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Within this specification, aspects have been described in a way which enables a clear and concise specification to be written, but it is intended and will be appreciated that aspects may be variously combined or separated without parting from the present disclosure. For example, it will be appreciated that all preferred features described herein are applicable to all aspects of the disclosed technology described herein.

Thus, while the disclosed technology has been described in connection with particular aspects and examples, the disclosed technology is not necessarily so limited, and that numerous other aspects, examples, uses, modifications and departures from the aspects, examples, and uses are intended to be encompassed by the claims attached hereto. The entire disclosure of each patent and publication cited herein is incorporated by reference, as if each such patent or publication were individually incorporated by reference herein.

Various features and advantages of the present disclosure are set forth in the following claims.

## Claims

1. A battery (200, 300, 400, 500, 600, 700) for a material handling vehicle (100), comprising:
a plurality of battery cells (151, 152, 153, 154, 155, 156); and
an enclosure comprising:
a first piece of bent sheet metal (111);
a second piece of bent sheet metal (112) bolted to the first piece of bent sheet metal (111);
a metal base plate (160) positioned below a bottom surface of the first piece of bent sheet metal (111) and below a bottom surface of the second piece of bent sheet metal (112), the first piece of bent sheet metal (111) and the second piece of bent sheet metal (112) being bolted to the metal base plate (160); and
a lid assembly (120) comprising a gasket (124), the lid assembly (120) positioned above a top surface of the first piece of bent sheet metal (111) and above a top surface of the second piece of bent sheet metal (112) such that the lid assembly (120) seals the plurality of battery cells (151, 152, 153, 154, 155, 156) within the enclosure together with the first piece of bent sheet metal (111), the second piece of bent sheet metal (112), and the metal base plate (160);
wherein the first piece of bent sheet metal (111), the second piece of bent sheet metal (112), the metal base plate (160), and the lid assembly (120) are not welded.

2. The battery (200, 300, 400, 500, 600, 700) of claim 1, wherein:
the enclosure comprises a metal frame (117) positioned on the top surface of the first piece of bent sheet metal (111) and on the top surface of the second piece of bent sheet metal (112); and
the lid assembly (120) is bolted to the metal frame (117).

3. The battery (200, 300, 400, 500, 600, 700) of any of the preceding claims, wherein the lid assembly (120) comprises a compression limiter (122).

4. The battery (200, 300, 400, 500, 600, 700) of any of the preceding claims, wherein the metal base plate (160) comprises a second gasket.

5. The battery (200, 300, 400, 500, 600, 700) of any of the preceding claims, comprising a metal cross beam (181, 182, 183, 184) bolted to the metal base plate (160) to provide structural support for the plurality of battery cells (151, 152, 153, 154, 155, 156).

6. The battery (200, 300, 400, 500, 600, 700) of any of the preceding claims, wherein the enclosure comprises an anti-tip plate (196) disposed on an outer surface of the enclosure, the anti-tip plate (196) comprising a slot extending towards an outer periphery of the metal base plate (160) in a direction towards the metal base plate (160).

7. The battery (200, 300, 400, 500, 600, 700) of claim 6, wherein the enclosure comprises a second anti-tip plate (197) disposed on the outer surface of the enclosure, the second anti-tip plate (197) comprising a second slot extending towards the outer periphery of the metal base plate (160) in the direction towards the metal base plate (160).

8. The battery (200, 300, 400, 500, 600, 700) of any of the preceding claims, wherein:
the plurality of battery cells (151, 152, 153, 154, 155, 156) comprises a first row of battery cells (151, 153, 155) and a second row of battery cells (152, 154, 156) that is positioned above the first row of battery cells (151, 153, 155,); and
the battery (200, 300, 400, 500, 600, 700) comprises a middle metal tray that is positioned between the first row of battery cells (151, 153, 155) and the second row of battery cells (152, 154, 156).

9. The battery (200, 300, 400, 500, 600, 700) of claim 8, wherein:
the battery (200, 300, 400, 500, 600, 700) comprises a stiffening plate (195); and
the stiffening plate (195) comprises:
a horizontal section coupled to a bottom surface of the middle metal tray, the bottom surface of the middle metal tray opposite the second row of battery cells (152, 154, 156); and
a vertical section extending upward towards the second row of battery cells (152, 154, 156).

10. The battery (200, 300, 400, 500, 600, 700) of any of the preceding claims, comprising:
a first metal counterweight (113) bolted to a first side of the battery (200, 300, 400, 500, 600, 700); and
a second metal counterweight (114) bolted to a second side of the battery (200, 300, 400, 500, 600, 700), the second side of the battery (200, 300, 400, 500, 600, 700) opposite the first side of the battery (200, 300, 400, 500, 600, 700).

11. The battery (200, 300, 400, 500, 600, 700) of claim 10, comprising:
a third metal counterweight (115) bolted to a third side of the battery (200, 300, 400, 500, 600, 700); and
a fourth metal counterweight (116) bolted to a fourth side of the battery (200, 300, 400, 500, 600, 700), the fourth side of the battery (200, 300, 400, 500, 600, 700) opposite the third side of the battery (200, 300, 400, 500, 600, 700).

12. The battery (200, 300, 400, 500, 600, 700) of any of the preceding claims, comprising an upper metal tray disposed over the plurality of battery cells (151, 152, 153, 154, 155, 156) and an electronics tray disposed on the upper metal tray.

13. The battery (200, 300, 400, 500, 600, 700) of claim 12, wherein the electronics tray comprises a controller and a contactor.

14. The battery (200, 300, 400, 500, 600, 700) of any of the preceding claims, wherein:
the first piece of bent sheet metal (111) comprises a first piece of bent sheet steel; and
the second piece of bent sheet metal (112) comprises a second piece of bent sheet steel.

15. The battery (200, 300, 400, 500, 600, 700) of any of the preceding claims, wherein the plurality of battery cells (151, 152, 153, 154, 155, 156) comprise lithium iron phosphate (LFP) battery cells.
